# DEMANDE DE BREVET EUROPEEN

(11) **EP 3 171 240 A1**
(43) Date de publication de la demande: **24.05.2017**
(21) Numéro de dépôt: 16194614.0
(22) Date de dépôt: 19.10.2016
(51) Int. Cl.: G05D 1/00, G08G 5/06, G05D 1/02

(54) **PROCÉDÉ DE PILOTAGE AUTOMATIQUE D'UN AERONEF AU SOL ET DISPOSITIF POUR SA MISE EN OEUVRE**

(30) Priorité: 19.11.2015 FR 1561119
(71) Demandeur: Airbus (S.A.S.), 31700 Blagnac (FR)
(72) Inventeur: Alonso Tabares, Diego, 31300 Toulouse (FR)
(74) Mandataire: Gicquel, Olivier Yves Gérard

(57) **Abrégé**

L'invention a pour objet un procédé de pilotage automatique d'un aéronef (10) au sol, caractérisé en ce qu'il comprend, lorsqu'une commande d'activation (30) présente dans le cockpit (24) de l'aéronef est activée, les étapes de :
- détermination d'au moins une séquence d'instructions de roulage en fonction de caractéristiques statiques et dynamiques de l'aéronef (10) et d'un trajet de roulage à parcourir, et
- transmission de la séquence d'instructions de roulage déterminée au(x) système(s) de contrôle (20.1 à 20.4) pilotant les systèmes de déplacement (18.1 à 18.4) de l'aéronef (10) afin que l'aéronef (10) parcoure le trajet de roulage.

L'invention a également pour objet un dispositif de pilotage automatique d'un aéronef (10) au sol.

## Description

L'invention se rapporte à un procédé de pilotage automatique d'un aéronef au sol ainsi qu'à un dispositif pour sa mise en oeuvre.

Un aéroport comprend au moins une piste d'atterrissage, plusieurs points de stationnement et de nombreuses voies de roulage pour relier chaque piste d'atterrissage à certains points de stationnement.

Après son atterrissage, l'aéronef effectue une phase de roulage allant d'une piste d'atterrissage jusqu'à un point de stationnement. Durant cette phase de roulage, l'aéronef est piloté manuellement afin de parcourir un trajet de roulage déterminé par le pilote à partir d'instructions transmises par un poste de contrôle du trafic aérien.

Compte tenu de la complexité de certains aéroports, la phase de roulage peut engendrer une désorganisation de la circulation aéroportuaire et donc des retards pour les passagers.

Pour simplifier cette phase de roulage, le document FR-2.902.221 propose un procédé d'aide à la navigation au sol. Selon ce document, un signal d'alerte informe le pilote si au moins une position réelle de l'aéronef ne se trouve pas sur une voie de roulage ou si l'orientation réelle de l'aéronef ne correspond pas au sens de circulation pour une voie de roulage donnée.

Ce procédé n'est pas pleinement satisfaisant car il n'informe le pilote qu'a posteriori, une fois l'erreur survenue. Il ne permet pas de prévenir les erreurs.

Au point de stationnement, l'aéronef doit être immobilisé à une position d'arrêt donnée avec une orientation d'arrêt.

Lors de l'approche du point de stationnement, le pilote suit des instructions indiquées par une assistance extérieure pour stopper et orienter l'aéronef correctement.

Selon un premier mode opératoire appelé « marshalling » en anglais, les instructions sont données par un opérateur au sol (éventuellement accompagné par une voiture fournissant des indications dynamiques lumineuses) et se présentent sous la forme de consignes visuelles qui sont fonction de la gestuelle interprétée par l'opérateur au sol.

Selon un deuxième mode opératoire appelé VDGS (pour « Visual Docking Guidance System » en anglais), les instructions se présentent sous la forme de consignes visuelles qui sont affichées sur un écran positionné face à l'aéronef.

Dans les deux cas, les consignes étant visuelles, il existe un risque lors de l'approche du point de stationnement d'une mauvaise visualisation des consignes par le pilote. Ce risque est accentué lorsque les conditions climatiques sont mauvaises.

Selon un autre inconvénient, les deux modes opératoires de l'art antérieur conduisent à une imprécision et une non-répétabilité concernant la position et l'orientation d'arrêt de l'aéronef au point de stationnement. Cette imprécision et non-répétabilité rendent difficile l'automatisation de certaines opérations et doivent être compensée par des installations aéroportuaires plus complexes.

Le document FR2968111 décrit un dispositif d'aide au pilotage permettant de générer une trajectoire de roulage dans un aéroport. Le dispositif utilise les informations d'une base de données aéroportuaires et en extrait des éléments surfaciques représentant l'infrastructure aéroportuaire. Le dispositif décrit un ensemble d'outils mathématiques permettant de générer des polylignes et des courbes d'une trajectoires de roulage. Cette trajectoire peut ensuite être transmise à un écran d'affichage.

Le document EP2881928 décrit un système de génération de trajectoire de guidage et les affiche sur un écran dédié. Le système prévoir également un outil de prédiction qui identifie à partir de données avion et de donnée aéroportuaires les écarts possibles à la trajectoire de roulage généré.

Aussi, la présente invention vise à remédier aux inconvénients de l'art antérieur.

A cet effet, l'invention a pour objet un procédé de pilotage automatique d'un aéronef au sol, ledit aéronef comprenant un cockpit, des systèmes de déplacement, au moins un système de contrôle configuré pour piloter les systèmes de déplacement et au moins une commande manuelle configurée pour transmettre au moins une instruction au(x) système(s) de contrôle.

Selon l'invention, le procédé se caractérise en ce qu'il comprend, lorsqu'une commande d'activation présente dans le cockpit est activée, les étapes de :
- détermination d'au moins une séquence d'instructions de roulage en fonction de caractéristiques statiques et dynamiques de l'aéronef et d'un trajet de roulage à parcourir,
- transmission de la séquence d'instructions de roulage déterminée au(x) système(s) de contrôle pilotant les systèmes de déplacement de l'aéronef afin que l'aéronef parcoure le trajet de roulage.

L'invention permet d'obtenir une meilleure régularité concernant la précision de la position et de l'orientation d'arrêt de l'aéronef à la fin du trajet de roulage. De plus, l'invention permet de supprimer les risques d'une mauvaise visualisation et/ou interprétation de consignes visuelles.

Avantageusement, le procédé comprend une étape d'ajustement des caractéristiques dynamiques de l'aéronef en fonction d'au moins une caractéristique des conditions climatiques.

Préférentiellement, le procédé comprend les étapes visant à :
- réaliser une comparaison entre une valeur réelle d'une caractéristique de l'aéronef déterminée par un système de mesure et une valeur théorique de cette caractéristique,
- déterminer, en fonction de la comparaison, au moins une instruction de roulage corrective,
- transmettre l'instruction de roulage corrective déterminée au(x) système(s) de contrôle.

Selon un mode de réalisation, le trajet de roulage à parcourir est déterminé à partir d'une base de données et d'une consigne transmise à l'aéronef par un poste de contrôle de trafic aérien.

Selon une autre caractéristique, le procédé comprend une étape visant à choisir le trajet de roulage à parcourir parmi une liste de trajets de roulage possibles.

De préférence, le procédé comprend une étape de vérification que le trajet de roulage à parcourir peut être accompli.

L'invention a également pour objet un dispositif de pilotage automatique d'un aéronef au sol, qui se caractérise en ce qu'il comprend :
- une base de données comprenant des caractéristiques statiques et dynamiques de l'aéronef pour permettre de déterminer au moins une séquence d'instructions de roulage,
- une commande d'activation positionnée dans le cockpit et configurée pour être actionnée par un pilote,
- un système de commande automatique configuré pour :
   o déterminer de manière automatique au moins une séquence d'instructions de roulage à exécuter en fonction d'un trajet de roulage à parcourir,
   o transmettre la séquence d'instructions de roulage déterminée au(x) système(s) de contrôle pilotant les systèmes de déplacement afin que l'aéronef parcoure le trajet de roulage.

Avantageusement, le dispositif comprend au moins un système de mesure d'au moins une caractéristique des conditions climatiques et le système de commande est configuré pour ajuster les caractéristiques dynamiques de l'aéronef en fonction de la caractéristique mesurée des conditions climatiques.

De préférence, le dispositif comprend un système de mesure configuré pour déterminer une valeur réelle d'une caractéristique de l'aéronef et le système de commande automatique comprend un calculateur configuré pour :
- réaliser une comparaison entre la valeur réelle de la caractéristique de l'aéronef déterminée par le système de mesure et une valeur théorique de cette caractéristique, et
- déterminer en fonction de la comparaison au moins une instruction de roulage corrective à transmettre au(x) système(s) de contrôle.

Selon une autre caractéristique, la base de données comprend des informations pour permettre de déterminer le trajet de roulage à parcourir.

Selon un mode de réalisation, le dispositif comprend un écran de visualisation et/ou un système de saisie configuré pour permettre à un pilote de saisir une consigne transmise par un poste de contrôle de trafic aérien et/ou un système de communication sans fil configuré pour permettre à un opérateur au sol de transmettre des instructions de roulage au(x) système(s) de contrôle de l'aéronef.

D'autres caractéristiques et avantages ressortiront de la description qui va suivre de l'invention, description donnée à titre d'exemple uniquement, en regard des dessins annexés sur lesquels :
- La figure 1 est une vue de dessus d'un aéroport qui illustre un exemple d'un trajet de roulage suivi par un aéronef,
- La figure 2 est un schéma d'un dispositif de pilotage automatique d'un aéronef au sol qui illustre un mode de réalisation de l'invention.

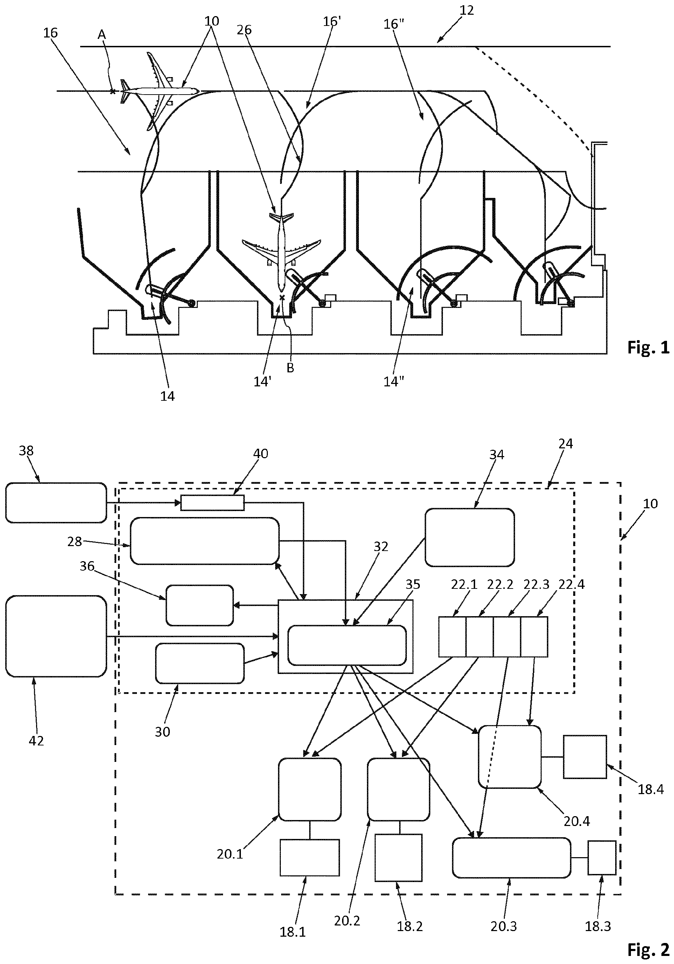

Sur la figure 1, on a représenté un aéronef 10 qui circule sur un aéroport 12.

Cet aéroport 12 comprend au moins une piste d'atterrissage (non représentée), des points de stationnement 14, 14', 14" et des voies de roulage 16, 16', 16" qui relient chaque piste d'atterrissage à certains points de stationnement 14, 14', 14". Chaque piste d'atterrissage, chaque voie de roulage 16, 16', 16" et chaque point de stationnement 14, 14', 14" comprend un identifiant.

Sur la figure 2, l'aéronef 10 est représenté schématiquement sous la forme d'un rectangle en pointillés. Pour se déplacer et s'immobiliser au sol, l'aéronef 10 comprend des systèmes de déplacement 18.1 à 18.4, au moins un système de contrôle 20.1 à 20.4 configuré pour contrôler les systèmes de déplacement 18.1 à 18.4 et au moins une commande manuelle 22.1 à 22.4 configurée pour transmettre au moins une instruction au(x) système(s) de contrôle 20.1 à 20.4 et formant une interface entre un pilote et le ou les système(s) de contrôle 20.1 à 20.4.

Par système de déplacement, on entend un sous-ensemble de l'aéronef 10 configuré pour permettre à l'aéronef 10 de bouger, s'orienter, s'immobiliser au sol.

A titre d'exemple, l'aéronef 10 comprend :
- un premier système de déplacement 18.1 de type direction configuré pour modifier l'orientation de l'aéronef 10,
- un deuxième système de déplacement 18.2 de type freinage configuré pour immobiliser l'aéronef 10,
- un troisième système de déplacement 18.3 de type propulsion configuré pour déplacer l'aéronef 10,
- un quatrième système de déplacement 18.4 de type motorisation électrique configuré pour entrainer en rotation au moins une roue de l'aéronef 10.

Selon une configuration visible sur la figure 2, chaque système de déplacement 18.1 à 18.4 est piloté par un système de contrôle 20.1 à 20.4 qui lui est dédié et chaque système de contrôle 20.1 à 20.4 est relié à une commande manuelle 22.1 à 22.4 qui lui est dédiée.

Selon d'autres configurations, un même système de contrôle et/ou une même commande manuelle pilote plusieurs systèmes de déplacement.

L'aéronef 10 comprend un cockpit 24 dans lequel sont positionnées les commandes manuelles 22.1 à 22.4 précédemment citées.

Le cockpit 24, les commandes manuelles 22.1 à 22.4, les systèmes de contrôle 20.1 à 20.4 et les systèmes de déplacement 18.1 à 18.4 ne sont pas plus décrits car ils sont connus de l'homme du métier.

Sur l'aéroport, l'aéronef 10 effectue une phase de roulage durant laquelle le pilote réalise plusieurs manoeuvres de roulage afin que l'aéronef 10 parcoure un trajet de roulage 26 qui va d'un point de départ à un point d'arrivée et qui passe par au moins une voie de roulage. On entend par manoeuvre de roulage, les actions réalisées par le pilote sur les différentes commandes manuelles 22.1 à 22.4. Les points de départ et d'arrivée peuvent être une piste d'atterrissage ou de décollage, un point de stationnement ou une aire de maintenance ou tout autre infrastructure de l'aéroport 12.

Un trajet de roulage 26 correspond à une succession de positions théoriques que doit successivement occuper l'aéronef 10. Avantageusement, une orientation théorique de l'aéronef 10 est associée à chaque position théorique.

La position de l'aéronef 10 est définie par les coordonnées d'un point de l'aéronef 10 dans un référentiel. A titre d'exemple, les coordonnées GPS d'un point de l'aéronef 10 permettent d'indiquer la position de l'aéronef 10.

L'orientation de l'aéronef 10 correspond à un angle formé par la direction longitudinale de l'aéronef 10 (qui va de la pointe avant à la pointe arrière de l'aéronef 10) dans un référentiel. Les manoeuvres de roulage réalisées par le pilote sont converties en instructions de roulage qui sont transmises au(x) système(s) de contrôle 20.1 à 20.4 qui pilote(nt) les différents systèmes de déplacement 18.1 à 18.4.

On entend par instruction de roulage, au moins une information transmise au(x) système(s) de contrôle 20.1 à 20.4, comme par exemple, orienter les roues du train d'atterrissage du quatrième système de déplacement 18.4 ou fixer le niveau de poussée des moteurs du troisième système de déplacement 18.3.

Ainsi, les instructions de roulage comprennent :
- des instructions relatives au pilotage et aux changements de direction et destinées au premier système de déplacement 18.1 de type direction,
- des instructions relatives à la puissance du moteur et destinées au troisième système de déplacement 18.3 de type propulsion,
- des instructions relatives au freinage et destinées au deuxième système de déplacement 18.2 de type freinage.

Sur la figure 1, on a représenté une partie du trajet de roulage 26 qui relie un point A à un point B. Sur l'exemple visible sur la figure 1, le point B correspond au point de stationnement 14' et le trajet de roulage 26 emprunte la voie de roulage 16'.

Selon l'invention, l'aéronef 10 comprend un dispositif de pilotage automatique au sol configuré pour déplacer seul, sans l'intervention du pilote, l'aéronef 10 le long du trajet de roulage 26 à parcourir.

Ce dispositif de pilotage automatique comprend :
- une base de données 28 comprenant :
   ∘ des informations relatives à l'infrastructure de l'aéroport 12 pour permettre de déterminer le trajet de roulage 26 à parcourir,
   ∘ des caractéristiques statiques et dynamiques de l'aéronef 10 pour permettre de déterminer au moins une séquence d'instructions de roulage à exécuter pour que l'aéronef 10 parcoure le trajet de roulage 26,
- une commande d'activation 30 positionnée dans le cockpit 24 et configurée pour être actionnée par un pilote,
- un système 32 de commande automatique configuré pour, lorsque la commande d'activation 30 est actionnée :
   ∘ déterminer au moins une séquence d'instructions de roulage à exécuter en fonction du trajet de roulage 26 à parcourir,
   ∘ transmettre la séquence d'instructions de roulage au(x) système(s) de contrôle 20.1 à 20.4 afin que l'aéronef 10 parcoure le trajet de roulage 26.

La séquence d'instructions de roulage comprend à minima au moins une instruction de roulage.

Cette séquence d'instructions de roulage est déterminée de manière automatique en fonction du trajet de roulage 26 à parcourir et des caractéristiques statiques et dynamiques de l'aéronef 10 répertoriées dans la base de données 28.

Avantageusement, le dispositif de pilotage automatique comprend au moins un système de mesure d'au moins une caractéristique des conditions climatiques et le système 32 de commande est configuré pour ajuster les caractéristiques dynamiques de l'aéronef 10 en fonction de la caractéristique mesurée des conditions climatiques.

Selon un mode de réalisation, l'aéronef 10 intègre un ensemble de capteurs tels que des capteurs de pression, de température et d'humidité afin de connaitre les conditions climatiques et notamment l'état du sol et déterminer leur impact sur les performances de l'aéronef 10, sur son comportement dynamique et sur les instructions de roulage. Alternativement, les conditions climatiques sont transmises au pilote et/ou à un opérateur au sol par un élément extérieur à l'aéronef 10 comme par exemple un poste de contrôle de trafic aérien ou un opérateur au sol.

De préférence, une instruction transmise par les commandes manuelles 22.1 à 22.4 est prioritaire par rapport à une séquence d'instructions de roulage déterminée de manière automatique par le système 32 de commande automatique. Ainsi, à chaque instant, le pilote peut reprendre le contrôle de l'aéronef 10 en actionnant au moins l'une des commandes manuelles 22.1 à 22.4.

Lors de cette phase de roulage, l'aéronef 10 suit une trajectoire réelle qui correspond à une succession de positions réelles occupées par l'aéronef 10. Une orientation réelle est associée à chaque position réelle.

Avantageusement, le dispositif de pilotage automatique comprend un système 34 de mesure, en temps réel, d'au moins une valeur réelle d'une caractéristique de l'aéronef 10 lors de la phase de roulage. A titre d'exemple, les caractéristiques de l'aéronef 10 sont sa position, son orientation, sa vitesse, son accélération et/ou tout autre caractéristique dynamique.

Pour la présente demande, l'adjectif « réel/réelle » qualifie des caractéristiques relatives au déplacement effectif de l'aéronef 10 sur l'aéroport lors de la phase de roulage, en opposition à l'adjectif « théorique » qui qualifie des caractéristiques déterminées à partir du trajet de roulage 26 à parcourir et/ou de la séquence d'instructions de roulage associée au trajet de roulage 26 à parcourir.

En complément, le système 32 de commande automatique comprend un calculateur 35 configuré pour :
- réaliser une comparaison entre la valeur réelle de la caractéristique de l'aéronef 10 déterminée par le système 34 de mesure et une valeur théorique de cette caractéristique,
- déterminer au moins une instruction de roulage à transmettre au(x) système(s) de contrôle 20.1 à 20.4 en fonction de la comparaison afin que la trajectoire réelle de l'aéronef 10 corresponde au trajet de roulage 26 à parcourir.

Avantageusement, le dispositif de pilotage automatique au sol comprend un écran de visualisation 36 configuré pour afficher au moins le trajet de roulage 26 à parcourir. De préférence, l'écran de visualisation 36 est configuré pour afficher, en plus du trajet de roulage 26 à parcourir, au moins l'une des informations suivantes :
- l'identifiant du point d'arrivée,
- une cartographie de l'aéroport qui permet de visualiser l'ensemble des pistes d'atterrissage, des voies de roulage 16, 16', 16", des points de stationnement 14, 14', 14", le trajet de roulage 26 à parcourir étant clairement identifié et affiché sur ladite cartographie,
- une représentation symbolique de l'aéronef 10 qui se déplace en temps réel sur le trajet de roulage 26 à parcourir,
- la distance restante à parcourir et la durée théorique du déplacement jusqu'au point d'arrivée.

Bien entendu, l'invention n'est pas limitée à ces informations

Selon une autre caractéristique, le dispositif de pilotage automatique au sol détermine le trajet de roulage 26 à parcourir à partir de la base données 28 et d'au moins une consigne transmise à l'aéronef 10 par un poste de contrôle de trafic aérien.

Selon un premier mode opératoire, la consigne est comprise dans un message vocal 38 reçu par le pilote. Dans ce cas, le dispositif de pilotage automatique comprend un système de saisie 40, comme par exemple un clavier, relié au système 32 de commande automatique et configuré pour permettre au pilote de saisir la consigne reçue afin de renseigner le système 32 de commande automatique.

Selon un deuxième mode opératoire, la consigne est comprise dans un message 42 interprétable directement par le système 32 de commande automatique, à l'aide d'un dispositif d'aide à la communication tel que décrit dans le brevet EP-2.674.926. Par rapport au premier mode de réalisation, le deuxième mode opératoire permet de supprimer la saisie du pilote et de réduire par conséquent les risques d'erreurs de saisie.

Selon un mode de réalisation, le dispositif de pilotage automatique au sol comprend un support déporté logeant l'écran de visualisation 36 et le système de saisie 40. Avantageusement, le dispositif de pilotage automatique comprend un système de communication sans fil configuré pour permettre à un opérateur au sol de transmettre des instructions de roulage aux systèmes de contrôle 20.1 à 20.4 de l'aéronef 10.

Le contenu de la base de données 28 diffère d'un modèle d'aéronef 10 à l'autre et intègre des données relatives à au moins un aéroport, notamment celui dans lequel l'aéronef 10 se déplace.

Pour chaque aéronef 10, la base de données 28 comprend des caractéristiques statiques sur l'aéronef 10 relatives aux dimensions de l'aéronef 10, telles que sa longueur, son empennage, son envergure. La base de données 28 contient également des caractéristiques dynamiques relatives aux performances de l'aéronef 10, telles que la poussée des moteurs, l'angle de rotation des trains d'atterrissage, la puissance d'un dispositif d'avancement électrique (si une solution e-taxi est installée sur l'aéronef 10), les caractéristiques de braquage du système de freinage. Avantageusement, ces caractéristiques dynamiques de l'aéronef 10 sont actualisées selon les conditions climatiques.

Pour chaque aéroport indexé dans la base de données 28, la base de données 28 contient des caractéristiques détaillées sur l'infrastructure aéroportuaire et notamment toutes les caractéristiques nécessaires à l'élaboration d'un trajet de roulage 26. De façon non exhaustive, ces caractéristiques comprennent au moins les pistes d'atterrissage, les voies de roulage, les aires de stationnement, (pour embarquer ou débarquer des passagers ou pour des opérations de maintenance ou encore pour une phase d'attente entre deux vols), les lignes d'entrée et de sorties de chaque aire de stationnement, les points d'arrêt, les lignes de guidage et de repoussage (manoeuvre de « push-back » en terminologie anglo-saxonne). Selon un premier mode de réalisation, pour chaque aéroport, la base de données 28 répertorie tous les trajets de roulage 26 en associant un identifiant à chacun d'eux. Selon ce premier mode de réalisation, la consigne transmise à l'aéronef 10 comprend l'identifiant du trajet de roulage 26 à parcourir et le système 32 de commande automatique est configuré pour extraire de la base de données 28 le trajet de roulage 26 à parcourir à partir de l'identifiant reçu.

Selon un deuxième mode de réalisation, pour chaque aéroport, la base de données 28 répertorie toutes les pistes de roulage, tous les points de stationnement, chacun associé à un identifiant point de stationnement, et pour chaque couple piste d'atterrissage/point de stationnement un trajet de roulage 26 à parcourir. Selon ce deuxième mode de réalisation, la consigne transmise à l'aéronef 10 comprend l'identifiant du point de stationnement. Connaissant la position réelle de l'aéronef 10, le système 32 de commande automatique est configuré pour identifier la piste d'atterrissage sur laquelle l'aéronef 10 a atterrit.

Connaissant la piste d'atterrissage correspondant au début du trajet de roulage et l'identifiant du point de stationnement correspondant à la fin du trajet de roulage, le système 32 de commande automatique est configuré pour extraire de la base de données 28 le trajet de roulage 26 à parcourir.

Selon un troisième mode de réalisation, pour chaque aéroport, la base de données 28 répertorie toutes les pistes de roulage, tous les points de stationnement, chacun associé à un identifiant point de stationnement, et pour chaque couple piste d'atterrissage/point de stationnement, au moins un trajet de roulage 26. Par rapport au deuxième mode de réalisation, un couple piste d'atterrissage/point de stationnement peut être associé à plusieurs trajets de roulage 26. Selon ce troisième mode de réalisation, la consigne transmise à l'aéronef 10 comprend l'identifiant du point de stationnement.

Connaissant l'identifiant du point de stationnement correspondant à la fin du trajet de roulage 26, le système 32 de commande automatique est configuré pour extraire de la base de données 28 une liste de trajets de roulage 26 possibles.

Selon un premier mode opératoire, le pilote choisit le trajet de roulage 26 à parcourir parmi la liste de trajets de roulage 26 possibles, par exemple en utilisant le système de saisie 40.

Selon un deuxième mode opératoire, le système 32 de commande automatique choisit automatiquement le trajet de roulage 26 à parcourir parmi la liste de trajets de roulage 26 possibles, en fonction des règles officielles de circulation sur l'aéroport ou d'autres critères comme par exemple le trajet de roulage 26 le plus court.

Selon une autre caractéristique, le système 32 de commande automatique est configuré pour vérifier en fonction de la position réelle de l'aéronef 10 si le trajet de roulage 26 à parcourir peut être accompli. Préférentiellement, l'aéronef 10 comprend un système anticollision couplé au système 32 de commande automatique afin d'identifier notamment les véhicules mobiles (autres aéronefs et véhicules requis pour les opérations au sol). Si le système 32 de commande automatique détermine que le trajet de roulage 26 ne peut pas être accompli, le système 32 de commande automatique génère une alerte à destination du pilote ou supprime le trajet de roulage 26 de la liste des trajets de roulage 26 possibles.

A titre d'exemple, le système 32 de commande automatique et plus particulièrement le calculateur 35 sont configurés pour obtenir une précision de l'ordre de +/- 10 cm pour la position d'arrêt et de l'ordre de +/- 1 degré pour l'orientation d'arrêt.

La base de données 28 est stockée dans une mémoire présente dans l'aéronef 10. Cette mémoire, comme l'écran de visualisation 36, le calculateur 35, le système de saisie 40, peut être exclusivement dédiée au dispositif de pilotage automatique. En variante, la fonction d'au moins un de ces éléments peut être assurée par un composant déjà présent dans l'aéronef 10.

Le procédé de pilotage automatique au sol fonctionne de la manière suivante :
Un poste de contrôle de trafic aérien transmet à l'aéronef 10 des consignes relatives au trajet de roulage 26 à parcourir et/ou au point d'arrivée à atteindre.

A partir de ces consignes, le système de commande automatique détermine au moins un trajet de roulage 26 à parcourir.

Si plusieurs trajets de roulage sont envisageables, le système 32 de commande automatique demande au pilote de choisir le trajet de roulage 26 à parcourir. Connaissant la position réelle de l'aéronef 10, le système 32 de commande automatique indique au pilote si le trajet de roulage 26 choisi peut être accompli, et si le projet de roulage 26 choisi ne peut pas être accompli, demande au pilote de formuler un nouveau choix.

Dès que le pilote actionne la commande d'activation 30, le système 32 de commande automatique détermine automatiquement, en fonction des caractéristiques statiques et dynamiques de l'aéronef 10 et de préférence des conditions climatiques, une séquence d'instructions de roulage qu'il transmet au(x) système(s) de contrôle 20.1 à 20.4 afin de réaliser les manoeuvres de roulage permettant à l'aéronef 10 de parcourir le trajet de roulage 26 à parcourir et de s'immobiliser à la position d'arrêt du point de stationnement selon l'orientation d'arrêt.

Bien que décrite appliquée aux trajets de roulage pour atteindre les points de stationnement pour le débarquement ou l'embarquement des passagers, l'invention n'est pas limitée à ces trajets et peut s'appliquer à tous les types de trajets au sol de l'aéronef 10 depuis un point de départ jusqu'à un point d'arrivée. Ainsi, l'invention peut être utilisée pour le trajet allant du point de stationnement jusqu'au seuil de la piste de décollage. L'invention peut également être mise en oeuvre pour le trajet appelé « Pushback » en anglais depuis le poste de stationnement jusqu'à la voie de roulage, visant à écarter l'aéronef 10 des installations de l'aéroport ou pour conduire l'aéronef 10 jusqu'à une zone de maintenance.

De même, le dispositif de pilotage automatique au sol peut être couplé à un dispositif de détection d'obstacle pour éviter les risques de collision.

Selon un premier avantage, l'invention fournit un trajet de roulage 26 et supprime les risques d'une mauvaise visualisation et/ou interprétation par le pilote des consignes visuelles lors de l'approche du point de stationnement. Il réduit ainsi les problèmes liées à des conditions de mauvaise visibilité (brouillard, neige,...)

Selon un deuxième avantage, l'invention permet de supprimer les risques d'erreurs concernant le trajet de roulage et/ou le point de stationnement qui sont la source de désorganisation et donc de retard et d'éventuels incidents.

Selon un troisième avantage, l'invention permet d'obtenir une meilleure régularité concernant la précision de la position et de l'orientation d'arrêt de l'aéronef 10. Par conséquent, il est possible de simplifier et de réduire les coûts des installations aéroportuaires nécessaires par exemple pour les passerelles pour l'embarquement ou le débarquement des passagers.

## Revendications

1. Procédé de pilotage automatique d'un aéronef (10) au sol, ledit aéronef (10) comprenant un cockpit (24), des systèmes de déplacement (18.1 à 18.4), au moins un système de contrôle (20.1 à 20.4) configuré pour piloter les systèmes de déplacement (18.1 à 18.4) et au moins une commande manuelle (22.1 à 22.2) configurée pour transmettre au moins une instruction au(x) système(s) de contrôle (20.1 à 20.4), **caractérisé en ce que** le procédé comprend, lorsqu'une commande d'activation (30) présente dans le cockpit (24) est activée, les étapes de :
- réalisation d'une comparaison entre une valeur réelle d'une caractéristique de l'aéronef (10) déterminée par un système de mesure (34) et une valeur théorique de cette caractéristique,
- détermination, en fonction de la comparaison, d'au moins une instruction de roulage,
- détermination, en fonction de caractéristiques statiques et dynamiques de l'aéronef (10) et d'un trajet de roulage (26) à parcourir, d'au moins une séquence d'instructions de roulage, comprenant la au moins une instruction de roulage,
- transmission de la séquence d'instructions de roulage déterminée au(x) système(s) de contrôle (20.1 à 20.4) pilotant les systèmes de déplacement (18.1 à 18.4) de l'aéronef (10) afin que l'aéronef (10) parcoure le trajet de roulage (26).

2. Procédé selon la revendication 1, **caractérisé en ce qu'**il comprend une étape d'ajustement des caractéristiques dynamiques de l'aéronef (10) en fonction d'au moins une caractéristique des conditions climatiques.

3. Procédé selon l'une des revendications précédentes, **caractérisé en ce que** le trajet de roulage (26) à parcourir est déterminé à partir d'une base de données (28) et d'une consigne transmise à l'aéronef (10) par un poste de contrôle de trafic aérien.

4. Procédé selon l'une des revendications précédentes, **caractérisé en ce qu'**il comprend une étape visant à choisir le trajet de roulage (26) à parcourir parmi une liste de trajets de roulage possibles.

5. Procédé selon la revendication précédente, **caractérisé en ce qu'**il comprend une étape de vérification que le trajet de roulage (26) à parcourir peut être accompli.

6. Dispositif de pilotage automatique d'un aéronef (10) au sol, ledit aéronef (10) comprenant un cockpit (24), des systèmes de déplacement (18.1 à 18.4), au moins un système de contrôle (20.1 à 20.4) configuré pour piloter les systèmes de déplacement (18.1 à 18.4) et au moins une commande manuelle (22.1 à 22.2) configurée pour transmettre au moins une instruction au(x) système(s) de contrôle (20.1 à 20.4), **caractérisé en ce que** le dispositif comprend :
- une base de données (28) comprenant des caractéristiques statiques et dynamiques de l'aéronef (10) pour permettre de déterminer au moins une séquence d'instructions de roulage,
- une commande d'activation (30) positionnée dans le cockpit (24) et configurée pour être actionnée par un pilote,
- un système (32) de commande automatique configuré pour :
o déterminer de manière automatique au moins une séquence d'instructions de roulage à exécuter en fonction d'un trajet de roulage (26) à parcourir,
o transmettre la séquence d'instructions de roulage déterminée au(x) système(s) de contrôle (20.1 à 20.4) pilotant les systèmes de déplacement (18.1 à 18.4) afin que l'aéronef (10) parcoure le trajet de roulage (26).

7. Dispositif selon la revendication 6, **caractérisé en ce qu'**il comprend au moins un système de mesure d'au moins une caractéristique des conditions climatiques et **en ce que** le système (32) de commande est configuré pour ajuster les caractéristiques dynamiques de l'aéronef (10) en fonction de la caractéristique mesurée des conditions climatiques.

8. Dispositif selon l'une des revendications 6 à 7, **caractérisé en ce qu'**il comprend un système (34) de mesure configuré pour déterminer une valeur réelle d'une caractéristique de l'aéronef (10) et **en ce que** le système (32) de commande automatique comprend un calculateur (35) configuré pour :
- réaliser une comparaison entre la valeur réelle de la caractéristique de l'aéronef (10) déterminée par le système (34) de mesure et une valeur théorique de cette caractéristique, et
- déterminer en fonction de la comparaison au moins une instruction de roulage corrective à transmettre au(x) système(s) de contrôle (20.1 à 20.4).

9. Dispositif selon l'une des revendications 6 à 8, **caractérisé en ce que** la base de données (28) comprend des informations pour permettre de déterminer le trajet de roulage (26) à parcourir.

10. Dispositif selon l'une des revendications 6 à 9, **caractérisé en ce qu'**il comprend un écran de visualisation (36).

11. Dispositif selon l'une des revendications 6 à 10, **caractérisé en ce qu'**il comprend un système de saisie (40) configuré pour permettre à un pilote de saisir une consigne transmise par un poste de contrôle de trafic aérien.

12. Dispositif selon l'une des revendications 6 à 11, **caractérisé en ce qu'**il comprend un système de communication sans fil configuré pour permettre à un opérateur au sol de transmettre des instructions de roulage aux systèmes de contrôle (20.1 à 20.4) de l'aéronef (10).
